# EUROPÄISCHE PATENTSCHRIFT

(11) **EP 3 107 739 B1**
(45) Veröffentlichungstag und Bekanntmachung des Hinweises auf die Patenterteilung: **31.05.2023**
(21) Anmeldenummer: 15706156.5
(22) Anmeldetag: 18.02.2015
(51) Int. Cl.: B42D 25/378, B42D 25/382, D21H 21/48, G07D 7/12, G07D 7/2033, G07D 7/1205

(54) **SICHERHEITSMERKMAL UND VERWENDUNG DESSELBEN, WERTDOKUMENT UND VERFAHREN ZUR PRÜFUNG DER ECHTHEIT DESSELBEN**
SECURITY FEATURE AND USE THEREOF, VALUE DOCUMENT AND PROCESS FOR VERIFYING THE AUTHENTICITY THEREOF
SIGNE DE SÉCURITÉ ET SON UTILISATION, DOCUMENT DE VALEUR ET PROCÉDÉ DE VÉRIFICATION DE L'AUTHENTICITÉ DE CELUI-CI

(30) Priorität: 19.02.2014 DE 102014002271; 10.11.2014 DE 102014016858
(43) Veröffentlichungstag der Anmeldung: 28.12.2016
(73) Patentinhaber: Giesecke+Devrient Currency Technology GmbH, 81677 München (DE)
(72) Erfinder: KECHT, Johann, 81677 München (DE); STARK, Martin, 81825 München (DE)
(74) Vertreter: Giesecke + Devrient IP
(86) Internationale Anmeldenummer: PCT/EP2015/000359
(87) Internationale Veröffentlichungsnummer: WO 2015/124295

(56) Entgegenhaltungen:
- WO-A2-2015/043760
- WO-A2-2015/043761
- DE-A1-102004 027 416
- DE-A1-102011 122 240
- DE-A1-102012 013 244
- US-A1- 2008 251 581

## Beschreibung

Die Erfindung betrifft ein Sicherheitsmerkmal für die Absicherung von Wertdokumenten, ein Wertdokument, insbesondere eine Banknote, mit einem solchen Sicherheitsmerkmal, ein Verfahren zur Prüfung der Echtheit des Wertdokuments durch Analyse von Einzelpartikeln des Sicherheitsmerkmals mit ortsaufgelösten mikroskopischen Methoden (nachstehend auch als "forensische Methoden" bezeichnet) und eine Verwendung des Sicherheitsmerkmals zur Absicherung eines Wertdokuments.

Die Absicherung von Wertdokumenten gegen Fälschung mittels Sicherheitsmerkmalen ist bereits seit langem bekannt. Es sind Merkmalsstoffe bekannt, die z.B. auf magnetischen, thermischen, elektrischen und/oder optischen (z.B. Absorption und Emission) Effekten beruhen, durch welche die spezifische Detektierbarkeit gewährleistet wird.

Die DE 10 2012 013 244 A1 beschreibt ein Wertdokument mit lumineszierenden, partikulären Agglomeraten, die jeweils mindestens zwei unterschiedliche, mit einer ersten bzw. einer zweiten Emissionswellenlänge emittierende, lumineszierende, feste homogene Phasen beinhalten. Mittels der Agglomeration von zwei Lumineszenzpigmenten in einem Partikel wird an verschiedenen Messorten des Wertdokuments eine Korrelation ihrer Lumineszenzintensitäten bewirkt. Das Verfahren zur Überprüfung des Vorliegens eines Wertdokuments umfasst genauer gesagt die folgenden Schritte:
a) das Anregen der lumineszierenden Stoffe zur Emission;
b) das makroskopisch ortsaufgelöste und wellenlängenselektive Erfassen von Messwerten für die von den lumineszierenden Stoffen emittierte Strahlung, wobei für jede der ersten und der zweiten Emissionswellenlänge Messwertpaare Emissionswellenlänge/Ort erzeugt werden, um somit erste Lumineszenzintensitäten bei der ersten Emissionswellenlänge und zweite Lumineszenzintensitäten bei der zweiten Emissionswellenlänge zu gewinnen;
c) das Überprüfen, ob eine statistische Korrelation zwischen den ersten Lumineszenzintensitäten und den zweiten Lumineszenzintensitäten vorliegt. Forensische Sicherheitsmerkmale (d.h. Sicherheitsmerkmale, deren Echtheitsnachweis auf der Analyse von Einzelpartikeln mit ortsaufgelösten mikroskopischen Methoden beruht), bei denen mittels ortsaufgelöster Analysetechniken (wie z.B. die ortsaufgelöste Röntgenbeugung, die ortsaufgelöste Raman-Streuung, die energiedispersive Röntgenspektroskopie oder die ortsaufgelöste Röntgenfluoreszenzanalyse) die Substruktur einzelner Merkmalsstoffpartikel ortsaufgelöst detektiert und identifiziert wird, werden in dieser Schrift allerdings nicht beschrieben.

Die US 2012/0175528 A1 beschreibt eine Partikelzusammensetzung mit Partikeln, von denen zumindest ein Partikel mindestens zwei verschiedene kristalline Phasen und/oder Glasphasen enthält. Jede Phase umfasst ein Wirtsgitter und ein gegenüber elektromagnetischer Strahlung empfindliches Dotiermittel. Die Lumineszenzemission der einzelnen lumineszierenden Phasen ergibt infolge der Agglomeration ein gut definiertes Mischsignal. Die in diesem Stand der Technik beschriebenen, relativ homogen aufgebauten Agglomerate sind als forensisches Sicherheitsmerkmal jedoch nicht geeignet. Die Agglomerate werden über einen speziellen Sprühtrocknungsprozess hergestellt. Auf diese Weise sind die einzelnen Phasenbereiche der unterschiedlichen Lumineszenzpigmente im Agglomerat sehr klein, d.h. teilweise nur wenige Nanometer groß, wobei die gesamte Partikelgröße <10 µm beträgt. Die Agglomerate als ganzes erscheinen dadurch sozusagen homogen aufgebaut, was für den in der Schrift US 2012/0175528 A1 vorgesehenen Einsatz als Mischsignal-emittierendes Lumineszenzpigment auch vorteilhaft ist. Bei einem Einsatz als forensisches Sicherheitsmerkmal im Sinne der vorliegenden Anmeldung lassen sich jedoch keine räumlich klar separierten Bereiche für die beiden Lumineszenzpigmentarten mehr nachweisen. Das Agglomerat lässt sich somit nicht bzw. nur sehr schwer von einem einzelnen Lumineszenzpigment unterscheiden, welches ein mit dem Mischsignal identisches oder ähnliches Lumineszenzsignal emittiert.

Die WO 2009/ 071 167A2 beschreibt eine forensische Markierung von Farben, Kunststoffen, etc. mit einem Sicherheitspigment, das aus in eine anorganische transparente Matrix eingebetteten Farbstoffpartikeln besteht. Zum Nachweis des forensischen Markers wird zunächst die äußere Form und Größe des Sicherheitspigmentes sowie anschließend die Farbe bzw. Form, Größe und Anzahl der eingelagerten Farbstoffpartikel unter dem Mikroskop bestimmt. Dabei wirkt sich die breite Verfügbarkeit von Mikroskopen als das zum Nachweis verwendete Hilfsmittel nachteilig auf die Sicherheit der Markierung aus, da bei einem Fälschungsangriff die wesentlichen Aspekte der Markierung leicht erkannt werden können.

Die US 2003/0132538 A1 beschreibt das Verkapseln von zwei oder mehr Fluoreszenzträgern für unterschiedliche Anwendungen. Des Weiteren wird eine Vielzahl anwendbare Analysemethoden beschrieben, darunter ein "luminometer microscope". Sicherheitsmerkmale werden in dieser Schrift allerdings nicht beschrieben.

Die Schrift WO 2010/048535 A1 beschreibt ein VIS-VIS-Merkmalssystem basierend auf einem Luminophor-Gemisch, bei dem die beiden Gemischanteile über ihr spezifisches Anregungsspektrum unterschieden werden können. Es werden jedoch weder Agglomerate verwendet noch forensische Analysen auf Einzelpartikelebene durchgeführt.

Die Schrift WO2012/094108A1 beschreibt poröse Polymerpartikel für Toner bzw. Sicherheitsanwendungen, die in den einzelnen Poren mit mehreren unterscheidbaren, insbesondere fluoreszierenden, radioaktiven oder IRabsorbierenden Markern beladen werden. Die Porengröße beträgt 20nm bis 4µm, die Partikelgröße 2µm bis 75µm. Es werden jedoch keine forensischen Analysen auf Einzelpartikelebene beschrieben.

Die Schrift WO 2010/138914 A1 beschreibt die Kombination von SERS-Nanopartikeln mit Lumineszenzstoffen, magnetischen Stoffen und Stoffen mit unterscheidbarem Massenspektrum oder XRF-Spektrum, wobei die Kombination über eine Verkapselung, z.B. in einer Silica-Hülle, bewirkt wird. Es werden jedoch keine forensischen Analysen auf Einzelpartikelebene diskutiert.

Die DE 102012013244 A1 beschreibt ein Sicherheitsmerkmal für die Absicherung von Wertdokumenten, umfassend Agglomerat-Partikel, die aus mindestens zwei unterschiedlichen, räumlich getrennten festen homogenen Phasen zusammengesetzt sind. Bei den Einzelphasen handelt es sich zwingend um Lumineszenzstoffe mit unterschiedlichen Emissionswellenlängen im IR-Bereich. Im Absatz [0019] werden partikuläre Agglomerate beschrieben, die mindestens zwei unterschiedliche lumineszierende Stoffe aufweisen, die unabhängig voneinander durch Strahlung im infraroten und/ oder sichtbaren und/ oder ultravioletten Bereich zur Lumineszenzemission, bevorzugt Phosphoreszenzemission, anregbar sind.

Der Erfindung liegt die Aufgabe zugrunde, ein mit Bezug auf die Fälschungssicherheit verbessertes Sicherheitsmerkmal und ein mit einem solchen Sicherheitsmerkmal versehenes Wertdokument bereitzustellen. Eine weitere Aufgabe betrifft die Bereitstellung eines Verfahrens zur Prüfung der Echtheit des Wertdokuments.

Diese Aufgabe wird durch die in den Hauptansprüchen definierten Merkmalskombinationen gelöst. Bevorzugte Ausführungsformen sind Gegenstand der Unteransprüche.

### Ausführliche Beschreibung der Erfindung

Wertdokumente im Rahmen der Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise Schmuck, CDs, Verpackungen und ähnliches. Bei dem Wertdokumentsubstrat muss es sich nicht zwangsläufig um ein Papiersubstrat handeln, es könnte auch ein Kunststoffsubstrat sein oder ein Substrat, das sowohl Papier-Bestandteile als auch Kunststoffbestandteile aufweist. Das bevorzugte Anwendungsgebiet sind Banknoten, die insbesondere auf einem Papiersubstrat beruhen.

Forensische Sicherheitsmerkmale sind im Stand der Technik bekannt. In der vorliegenden Beschreibung werden unter forensischen Sicherheitsmerkmalen sogenannte "Mikrospektroskopische Sicherheitsmerkmale" bzw. Sicherheitsmerkmale verstanden, die mittels auf ortsaufgelöster Einzelpartikeluntersuchung basierender spektroskopischer Messtechniken, wie z.B. die ortsaufgelöste Röntgenbeugung, die ortsaufgelöste Raman-Streuung, die ortsaufgelöste Lumineszenzspektroskopie, die energiedispersive Röntgenspektroskopie oder die ortsaufgelöste Röntgenfluoreszenzanalyse detektierbar und identifizierbar sind. Die Schrift WO 2007/031077 A1 beschreibt die Verwendung spezieller Kieselalgen im Produktschutz. Die Kieselalgen können im Mikroskop anhand ihrer spezifischen Schalenstrukturen identifiziert werden. Weiterhin beschreibt die Schrift EP 0 927 750 B1 die Bestimmung der Elementverhältnisse in einem Einzelpartikel über SEM/EDX, z.B. mittels eines Rasterelektronenmikroskops, als Codierungsmethode für Sicherheitsmarker.

Auch der Einsatz von lumineszierenden Markern als Mikroskop-basierte Sicherheitsmerkmale ist bekannt. Beispielsweise beschreibt die Schrift US 8,153,984 B2 den Einsatz von lumineszierenden Partikeln mit einer spezifischen Größenverteilung zur Absicherung verschiedener Gegenstände.

Der vorliegenden Erfindung liegt der Gedanke zugrunde, für den Echtheitsnachweis eines Wertdokuments die räumlich aufgelöste, spektroskopische Messung einer spezifischen Eigenschaft auf Einzelpartikel-Ebene an einem zusammengesetzten Partikel (bzw. Agglomerat-Partikel) heranzuziehen. Die spezifische Eigenschaft betrifft das Lumineszenzverhalten mit messbaren Eigenschaften wie z.B. Anregungswellenlänge, Emissionswellenlänge, Intensität der Emission, An- oder Abklingzeit etc. Es sind auch weitere messbare Eigenschaften denkbar, wie z.B. Elementzusammensetzung, Raman-Signal, etc.

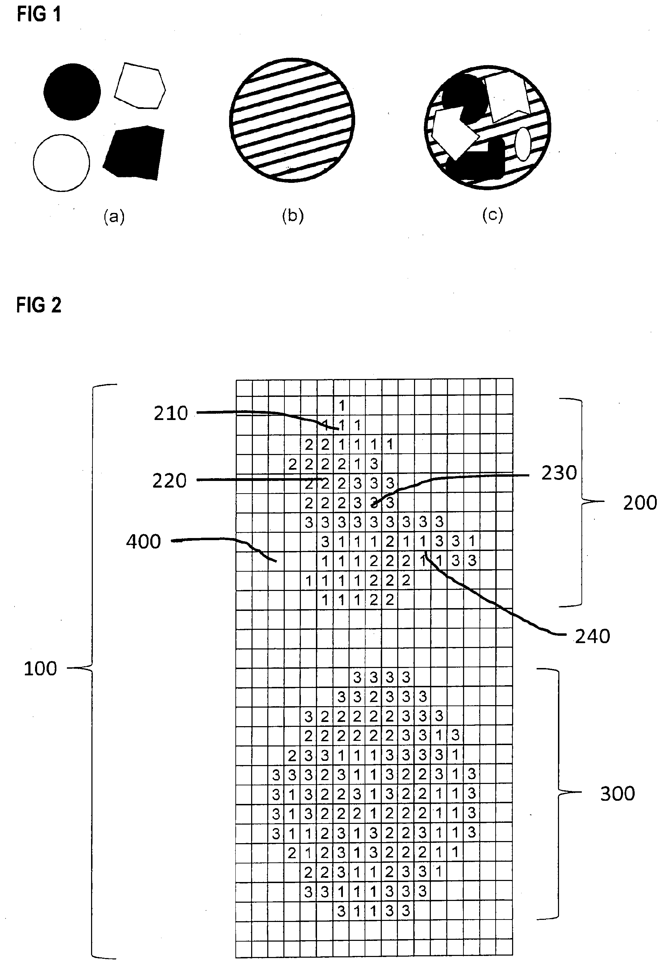

Erfindungsgemäß wird anhand einer vorbestimmten Analysemethode an einem einzelnen Partikel aufgezeigt, dass der Partikel aus verschiedenen festen homogenen Phasen mit unterschiedlichen Eigenschaften zusammengesetzt ist, wobei die Phasen jeweils einen räumlich ausgedehnten Bereich im Partikel ausbilden. Solche Partikel können mittels einer geeigneten analytischen Messmethode von einer Mischung aus Einzelpartikeln, die jeweils nur eine Eigenschaft einer einzelnen Phase aufzeigen, oder von homogenen Mischpartikeln, die jeweils beide Eigenschaften beider Phasen aufzeigen, unterschieden werden. Die zusammengesetzten Partikel, die das erfindungsgemäße Sicherheitsmerkmal bilden, können in Abhängigkeit von der gewählten Messmethode und der Partikelzusammensetzung auch Mischsignale mit unterschiedlichen Anteilen der Eigenschaften der ersten und zweiten Phase aufweisen. Charakteristisch ist aber, dass sich diese Verhältnisse je nach Position am Partikel verändern, und dass innerhalb des Partikels größere zusammenhängende Bereiche vorliegen, in denen jeweils die erste oder zweite Eigenschaft dominiert. Dabei ist insbesondere eine Variation der Eigenschaften im Partikel entlang allen drei Raumrichtungen vorteilhaft. Das bedeutet, dass in den erfindungsgemäßen Partikeln Wechsel zwischen entsprechend unterscheidbaren Phasen bevorzugt entlang aller drei Raumrichtungen auftreten. Dies erlaubt eine verbesserte Identifizierung der Partikel unabhängig von ihrer aktuell vorliegenden Orientierung. Dieses Verhalten ist schematisch in der Figur 1 dargestellt.

Fig. 1(a) ist ein Vergleichsbeispiel und zeigt eine Mischung aus Partikeln mit einer ersten Lumineszenzeigenschaft (schwarz) und Partikeln mit einer zweiten Lumineszenzeigenschaft (weiss). Fig. 1(b) ist ein weiteres Vergleichsbeispiel und zeigt einen Partikel, der einheitlich (in der Figur durch eine einheitliche, schraffierte Fläche veranschaulicht) an jeder Partikel-Position sowohl die erste Lumineszenzeigenschaft, als auch die zweite Lumineszenzeigenschaft zeigt. Fig. 1(c) veranschaulicht ein erfindungsgemäßes Ausführungsbeispiel und zeigt einen Partikel, der ortsabhängig die erste Lumineszenzeigenschaft, die zweite Lumineszenzeigenschaft oder Mischsignale aus erster und zweiter Lumineszenz zeigt.

Beispielsweise kann es sich in der Fig. 1 bei der ersten Eigenschaft die der ersten homogenen Phase zugeordnet wird (schwarze Flächen) um eine Lumineszenz mit einer Bande im roten Spektralbereich bei 620-630nm handeln und bei der zweiten Eigenschaft die der zweiten homogenen Phase zugeordnet wird (weiße Flächen) um eine Lumineszenz im roten Spektralbereich bei 625-645nm. Schraffiert gezeichnete Flächen lumineszieren gleichzeitig in beiden (überlappenden) Spektralbereichen. Bei der in Fig. 1(a) gezeigten Mischung handelt es sich also um eine einfache Mischung der beiden Leuchtstoffe. Fig. 1 (b) zeigt einen einzelnen Leuchtstoff, der gleichzeitig in beiden Spektralbereichen luminesziert. Der in der Fig. 1(c) gezeigte, zusammengesetzte Partikel zeigt ebenfalls Lumineszenz in beiden Spektralbereichen, besitzt jedoch räumlich getrennte Bereiche, in denen jeweils Lumineszenz in einem der beiden Spektralbereiche überwiegt bzw. Mischformen aus signifikant unterschiedlichen Anteilen der beiden Lumineszenzen auftreten. Bei nicht flachen Partikeln ist die derartige Separation der unterschiedlichen räumlich getrennten Bereiche nur möglich, wenn das spektroskopische Messverfahren in allen drei Raumrichtungen ortsaufgelöst misst. Andernfalls wird durch die Überlagerung in der dritten Dimension i.a. nur ein Mischspektrum der unterschiedlichen Beiträge aus den homogenen Phasen detektiert.

In einem weiteren Beispiel, das nicht unter den Schutzumfang der beiliegenden Ansprüche fällt, betrifft die sich innerhalb des Partikels verändernde Eigenschaft die Elementarzusammensetzung der beiden homogenen Phasen. In diesem Fall könnten die in der Figur 1 gezeigten schwarzen Flächen ein oder mehrere Elemente, z.B. Zink, enthalten, weiße Flächen andere Elemente, z.B. Aluminium, und schraffierte Flächen beide Elemente, z.B. Zink und Aluminium. In diesem Fall wären die Partikel in der Fig. 1(a) z.B. eine Mischung aus Zinkoxid und Aluminiumoxid, die Partikel in der Fig. 1(b) ein Zink-Aluminium-Spinell und die Partikel in der Fig. 1(c) ein festes Agglomerat aus Zinkoxid- und Aluminiumoxid-Partikeln.

Bevorzugt umfassen die Agglomerat-Partikel des erfindungsgemäßen Sicherheitsmerkmals mehrere anorganische Materialien, insbesondere bestehen sie nur aus anorganischen Materialien.

Die Partikel des erfindungsgemäßen Sicherheitsmerkmals sind lumineszierende Merkmalsstoffe, nämlich mit Emissionen im sichtbaren Spektralbereich. Die einzelnen, lumineszierenden, festen homogenen Phasen, die die zusammengesetzten Partikel (bzw. partikuläre Agglomerate oder Agglomerat-Partikel) des Sicherheitsmerkmals bilden, können z.B. auf einem eine Matrix bildenden anorganischen Festkörper basieren, der mit einem oder mehreren Seltenerdmetallen oder Übergangsmetallen dotiert ist. Geeignete anorganische Festkörper, die zur Bildung einer Matrix geeignet sind, sind beispielsweise:
Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Granate, darunter unter anderem z.B. Yttrium-Eisen-Granate, Yttrium-Aluminium-Granate, Gadolinium-Gallium-Granate; Perowskite, darunter unter anderem Yttrium-Aluminium-Perowskit, Lanthan-Gallium-Perowskit; Spinelle, darunter unter anderem Zink-Aluminium-Spinelle, Magnesium-Aluminium-Spinelle, Mangan-Eisen-Spinelle; oder Mischoxide wie z.B. ITO (Indiumzinnoxid);
Oxyhalogenide und Oxychalkogenide, insbesondere Oxychloride wie z. B. Yttriumoxychlorid, Lanthanoxychlorid; sowie Oxysulfide, wie z.B. Yttriumoxysulfid, Gadoliniumoxysulfid;
Sulfide und andere Chalkogenide, z.B. Zinksulfid, Cadmiumsulfid, Zinkselenid, Cadmiumselenid;
Sulfate, insbesondere Bariumsulfat und Strontiumsulfat;
Phosphate, insbesondere Bariumphosphat, Strontiumphosphat, Calciumphosphat, Yttriumphosphat, Lanthanphosphat, sowie komplexere phosphatbasierte Verbindungen wie z.B. Apatite, darunter unter anderem Calciumhydroxylapatite, Calciumfluoroapatite, Calciumchloroapatite; oder Spodiosite, darunter z.B. Calcium-Fluoro-Spodiosite, Calcium-Chloro-Spodiosite;
Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;
weitere anorganische Verbindungsklassen wie z.B. Vanadate, Germanate, Arsenate, Niobate, Tantalate.

Alternativ können die einzelnen, lumineszierenden, festen homogenen Phasen, die die zusammengesetzten Partikel des Sicherheitsmerkmals bilden auch auf mehreren, eine Matrix bildenden anorganischen Festkörpern basieren, die mit einem oder mehreren Seltenerdmetallen oder Übergangsmetallen dotiert sind, solange innerhalb jeder Phase eine homogene Eigenschaft vorhanden ist, die zum erfindungsgemäßen Echtheitsnachweis herangezogen werden kann.

Als Dotierelemente für die entsprechend geeigneten Matrixmaterialien werden insbesondere Sm, Pr, Eu, Mn, Dy, Tb, Ce, Ag, oder Cu eingesetzt um im sichtbaren Spektralbereich lumineszierende Phasen auszubilden. Besonders bevorzugt werden Sm, Pr, Eu für Lumineszenz im roten Spektralbereich, Tb, Mn, Dy, Ce für Lumineszenz im gelb-grünen Spektralbereich bzw. Tb, Ce, Eu für Lumineszenz im blauen Spektralbereich eingesetzt. Dabei werden in den zusammengesetzten Partikeln des Sicherheitsmerkmals unterschiedliche lumineszierende Phasen mit aus einer einzelnen Farbgruppe gewählten Dotierelementen im gleichen oder in unterschiedlichen Matrixmaterialien verwendet.

Die lumineszierenden Partikel (siehe beispielsweise Fig. 1(c)), die im Sicherheitsmerkmal der vorliegenden Erfindung zum Einsatz kommen, weisen eine stark erhöhte Sicherheit gegenüber der in Fig. 1(a) gezeigten Mischung aus Einzelstoffen bzw. den in Fig. 1(b) gezeigten homogenen Partikeln auf. Beispielsweise lassen sie sich nicht durch eine einfache Mischung aus zwei Dotierstoffen in einer Matrix nachahmen. Weiterhin lassen sich auch solche Kombinationen von Dotierstoffen einsetzen, die z.B. aufgrund von Energie-übertragungseffekten (z.B. Quenchingprozesse) nicht gleichzeitig in einer einzigen Matrix eingesetzt werden können. Da die Art der Matrix ebenfalls einen starken Effekt auf die Lumineszenzeigenschaften ausüben kann, ist es bei zusammengesetzten Partikeln ebenfalls möglich, durch eine geeignete Wahl der Matrizen Kombinationen aus Lumineszenzeigenschaften zu erhalten, die in einer einzigen Matrix nicht möglich sind.

Durch den Herstellungsprozess bedingt, tragen die einzelnen Phasen nicht zwingend in einem festen Verhältnis zu den einzelnen Agglomerat-Partikeln bei. Das bedeutet insbesondere, dass für einzelne untersuchte Agglomerat-partikel die beiden durch eine bestimmte (z.B. mikroskopische) Messmethode erhaltenen Signalintensitäten, die auf die beiden Phasen des Partikels zurückgehen, nicht notwendigerweise in einem vorbestimmten Verhältnis stehen. Ein derartiges vorbestimmtes Signalverhältnis würde sich erst bei einer makroskopischen Detektion mit einer Mittelung über sehr viele Einzel-Agglomerate einstellen. Beispielsweise könnte ein Agglomerat-Partikel eines erfindungsgemäß markierten Wertdokuments fünf Bereiche aufweisen, die der ersten homogenen Phase des Partikels zugeordnet werden können, und nur zwei Bereiche aufweisen, die der zweiten homogenen Phase zugeordnet werden können. Ein weiterer Agglomerat-Partikel des markierten Wertdokuments könnte pro homogene Phase zwei Bereiche aufweisen. Ein dritter Agglomerat-Partikel könnte einen Bereich aufweisen, der der ersten homogenen Phase des Agglomerats-Partikels zugeordnet werden kann, wobei die Fläche des Bereichs doppelt so groß wie die eines zweiten Bereichs ist, der der zweiten homogenen Phase zugeordnet werden kann.

Zur Gewährleistung einer zweifelsfreien Identifikation eines zusammengesetzten Agglomerat-Partikels ist es vorteilhaft, dass die räumlichen Bereiche der ersten bzw. zweiten homogenen Phase entsprechend groß sind. Ein aus zu kleinen Bestandteilen zusammengesetzter Partikel erscheint beim Analysieren räumlich homogen und kann folglich nicht eindeutig oder nur mit hohem Aufwand von einem "echten" homogenen Partikel unterschieden werden. Daher weisen die detektierten Bereiche, die zusammengesetzten Agglomerat-Partikel und die Einzelbestandteile zur Herstellung der zusammengesetzten Agglomerat-Partikel des erfindungsgemäßen Sicherheitsmerkmals bevorzugt bestimmte Mindestgrößen auf.

Es wird bevorzugt, dass die zusammengesetzten Partikel eine Korngröße (D99) in einem Bereich von 1 bis 30 µm, weiter bevorzugt in einem Bereich von 5 bis 20 µm, noch weiter bevorzugt in einem Bereich von 10 bis 20 µm und insbesondere bevorzugt in einem Bereich von 15 bis 20 µm aufweisen.

In einer bevorzugten Ausführungsform weisen die Agglomerat-Partikel eine dreidimensional ausgedehnte Form auf, insbesondere eine kugelähnliche oder fraktale Anordnung. Dabei beträgt das Aspektverhältnis der größten zur kleinsten Ausdehnung der Agglomerat-Partikel weniger als 1:2, bevorzugt weniger als 1:1,8, besonders bevorzugt weniger als 1:1,5. Dadurch weisen die Agglomerat-Partikel keine flächigen Stellen auf, an denen die Zusammensetzung bereits direkt beobachtbar wäre, sondern sie können nur mit dreidimensional auflösenden Methoden und entsprechendem apparativen Aufwand analysiert werden. Bei nicht dreidimensional aufgelöster Betrachtung dieser Partikel wird somit nur eine Mischfarbe der einzelnen Phasen wahrgenommen bzw. gemessen. Dies verbessert die Fälschungssicherheit des Sicherheitsmerkmals erheblich.

Unabhängig von den obigen D99-Korngrößen oder zusätzlich zu den obigen D99-Korngrößen weisen die zusammengesetzten Partikel bevorzugt eine Korngröße (D50) in einem Bereich von 1 bis 30 µm, weiter bevorzugt in einem Bereich von 5 bis 20 µm und insbesondere bevorzugt in einem Bereich von 7 bis 20 µm auf.

Die in der vorliegenden Schrift genannten D99- und D50-Werte basieren auf Messungen des hydrodynamischen Durchmessers mittels industrieüblicher Korngrößenbestimmungsgeräte wie z.B. der Marke "CILAS", welche Korngrößenverteilungen der in einer Flüssigkeit suspendierten Partikel durch Lichtstreuung bestimmen. Dabei bezeichnen D99 und D50, dass 99% bzw. 50% der Partikel, bezogen auf die volumengewichtete Korngrößenverteilungskurve, kleiner oder gleich sind als der angegebene Wert.

Die die unterschiedlichen homogenen Phasen verkörpernden Primärpartikel bzw. Pigmente, aus denen sich die Agglomerat-Partikel zusammensetzen, weisen bevorzugt eine Korngröße (D99) in einem Bereich von 3 bis 15 µm, weiter bevorzugt in einem Bereich von 4 bis 10 µm und insbesondere bevorzugt in einem Bereich von 5 bis 9 µm auf. Unabhängig davon oder zusätzlich dazu ist die Korngröße (D50) der Primärpartikel bzw. Pigmente, aus denen sich die Agglomerat-Partikel zusammensetzen, bevorzugt in einem Bereich von 1 bis 8 µm, weiter bevorzugt in einem Bereich von 1,2 bis 5 µm und insbesondere bevorzugt in einem Bereich von 1,5 bis 3 µm.

Durch Einhalten der obigen bevorzugten Korngrößenverhältnisse können besonders vorteilhafte zusammengesetzte Partikel erhalten werden. Die zusammengesetzten Partikel enthalten einerseits im Sinne der Erfindung mit mikroskopischen Spektroskopiemethoden gut separierbare und identifizierbare, größere, aus einer einzigen homogenen Phase bestehende Partikel-Bereiche (maßgeblich bestimmt durch den D99-Korngrößenwert der einzelnen Primärpartikel bzw. Pigmente, aus denen sich die Agglomerat-Partikel zusammensetzen). Die zusammengesetzten Partikel enthalten andererseits aus einer einzigen homogenen Phase bestehende Partikel-Bereiche, die bei der vergleichenden Analyse verschiedener einzelner Agglomerat-Partikel zu deutlich variierenden Verhältnissen der Signale der ersten und der zweiten homogenen Phase (maßgeblich bestimmt durch den D50-Korngrößenwert der einzelnen Primärpartikel bzw. Pigmente, aus denen sich die Agglomerat-Partikel zusammensetzen) führen. Die D99-Korngrößenwerte der einzelnen Primärpartikel bzw. Pigmente, aus denen sich die Agglomerat-Partikel zusammensetzen, sollten dabei relativ zur Größe der Agglomerat-Partikel weder zu hoch (erhöhte Wahrscheinlichkeit größere, aus einer einzigen homogenen Phase bestehende Partikel zu erhalten), noch zu niedrig (die aus einer einzigen homogenen Phase bestehenden Partikel-Bereiche im Agglomerat-Partikel werden für eine sichere Analyse zu klein) sein. Ebenso sollte der D50-Korngrößenwert der einzelnen Primärpartikel bzw. Pigmente, aus denen sich die Agglomerat-Partikel zusammensetzen, nicht kleiner als ein Mikrometer sein. Bei Korngrößen der Primärpartikel unter 1 Mikrometer können bei der mikroskopischen Analyse der Agglomerat-Partikel mit den bevorzugten Analyseverfahren (wie z.B. die ortsaufgelöste Röntgenbeugung, die ortsaufgelöste Raman-Streuung, die energiedispersive Röntgenspektroskopie oder die ortsaufgelöste Röntgenfluoreszenzanalyse) nicht mehr sicher die unterschiedlichen, festen homogenen Phasen räumlich getrennt identifiziert werden. Damit sind die unterschiedlichen Phasen nicht mehr zuverlässig separierbar.

Die zusammengesetzten Partikel werden vorzugsweise durch Agglomeration kleiner Primärpartikel bzw. Einzelpigmente bei gleichzeitiger Beschichtung mit einer Silicahülle erzeugt (siehe z.B. die WO 2006/072380 A2).

In einer bevorzugten Ausführungsform werden die einzelnen Primärpartikel mit einer dünnen Schicht aus einem stark streuenden anorganischen Bindemittel zusammengehalten. Die Schichtdicke des Bindemittels beträgt dabei 20 nm bis 4µm, bevorzugt 30nm bis 2µm, besonders bevorzugt 40nm bis 1µm. Das streuende Bindemittel kann durch zusammensintern von anorganischen Nanopartikeln aus z.B. SiO₂ mit Abmessungen im Bereich 10 nm bis 100nm gebildet werden. Das Bindemittel hat hierbei im Spektralbereich der Anregungsstrahlung einen Streulichtanteil (Haze) von 25%-60%, bevorzugt 30%-50%, besonders bevorzugt 35%-45%. Dadurch wird zwar die direkte Transmission des Bindemittels entsprechend auf <75%, bevorzugt <70%, besonders bevorzugt <65% reduziert. Durch die Lichtstreuung im Partikel wird jedoch im Fall lumineszierender Primärpartikel der Wirkungsquerschnitt für die Anregungsstrahlung verbessert, da hierfür nun statt der Primärpartikelfläche nun effektiv auch nähere Umgebung dieser zur Anregung beiträgt. Die Streuwirkung des Bindemittels darf aber - zumindest im Spektralbereich der emittierten Strahlung - auch nicht zu hoch sein, um die räumlich aufgelöste Detektion der emittierten Strahlung nicht zu stark zu beeinträchtigen und die Signale der unterschiedlichen Primärpartikel weiterhin zuverlässig separieren zu können.

Um die Sicherheit weiter zu erhöhen, können Agglomerat-Partikel aus zwei unterschiedlichen Partikeln mit einer ersten gemeinsamen Eigenschaft gebildet werden, wodurch sich die Agglomerat-Partikel erst bei räumlicher Untersuchung einer zweiten Eigenschaft als Agglomerat erweisen. Im Fall von lumineszierenden Partikeln kann die erste Eigenschaft das Emissionsspektrum sein, während als zweite Eigenschaft das zeitliche Verhalten der Lumineszenzemission ist. Dazu zählt die An- und / oder Abklingzeit.

Beispielsweise kann ein rot lumineszierender Leuchtstoff mit einer ersten Abklingzeit mit einem ebenso rot lumineszierenden Leuchtstoff mit einem im roten sehr ähnlichen oder gar identischen Emissionsspektrum, aber einer unterschiedlichen zweiten Abklingzeit agglomeriert werden. Die Agglomerat-Partikel wirken bei oberflächlicher Betrachtung der Emission wie homogene Partikel. Bei genauer räumlich aufgelöster Untersuchung der Abklingzeit können die unterschiedlichen Bereiche innerhalb des Agglomerat-Partikels, die eine erste bzw. eine zweite Abklingzeit aufweisen, identifiziert werden (z.B. mittels "FLIM", d.h. Fluorescence Lifetime Imaging Microscopy bzw. Fluoreszenzlebensdauer-Mikroskopie).

Besonders bevorzugt wird hierbei, dass mindestens eine Phase eine Lumineszenzlebensdauer und / oder Lumineszenzanklingzeit aufweist, die etwa der Pixelintegrationszeit oder länger entsprechen. Insbesondere bevorzugt sind Abklingzeiten >20µs, bevorzugt >100µs, besonders bevorzugt >500µs bzw. Anklingzeiten >2µs, bevorzugt >10µs, besonders bevorzugt >20µs. Dies erschwert die Entdeckung der lumineszierenden Phase in rasternden mikroskopischen Verfahren erheblich, da entsprechend lange Pixel-Integrationszeiten verwendet werden müssen um einen hinreichend großen Signal-Rauschabstand gegenüber dem Hintergrund zu erzielen.

Gemäß einer weiteren Ausführungsform können die Agglomerat-Partikel aus Leuchtstoffen zusammengesetzt sein, die zwar die gleichen (oder ähnliche) Emissionswellenlängen aufweisen, aber unterschiedliche Anregungsspektren besitzen. Durch Variation der Anregung können die unterschiedlichen Bereiche im Agglomerat-Partikel identifiziert werden.

Es ist möglich, als lumineszierende Stoffe auch Upconverter zu verwenden, also Stoffe, bei denen die Anregung bei einer höheren Wellenlänge erfolgt als die Emission.

Gemäß einer weiteren Ausführungsform, die nicht unter den Schutzumfang der beiliegenden Ansprüche fällt, können die Agglomerat-Partikel aus Partikeln zusammengesetzt sein, die zwar die gleichen Lumineszenzeigenschaften aufweisen, sich aber hinsichtlich der Elemente ihrer jeweiligen Matrix unterscheiden. Hierbei (da es in diesem Fall auf die Unterschiede in der Elementarzusammensetzung ankommt) ist es unerheblich, ob die Lumineszenz im sichtbaren oder im unsichtbaren Spektralbereich emittiert wird. Beispielsweise sind die beiden Stoffe Y₂O₂S:Yb und Gd₂O₂S:Yb in ihrem Lumineszenzverhalten kaum unterscheidbar. Agglomerat-Partikel aus diesen beiden Stoffen wirken bei spektraler Betrachtung wie ein einheitlicher Leuchtstoff und können als maschinenlesbares Merkmal eingesetzt werden. Bei einer forensischen, das heißt ortsaufgelösten Analyse der Elementbestandteile erkennt man jedoch getrennte Bereiche, welche jeweils Yttrium bzw. Gadolinium enthalten.

Zur weiteren Erhöhung der Sicherheit kann dem Sicherheitsmerkmal ein tarnender Stoff hinzugefügt werden, der ähnliche Eigenschaften wie die Agglomerat-Partikel aufweist und in deutlich höherer Konzentration vorkommt. Beispielweise kann ein Agglomerat-Partikel, der scharfbandig in einem Spektralbereich emittiert, durch Zugabe größerer Mengen eines Tarnstoffs aus breitbandig im gleichen Spektralbereich lumineszierenden Partikeln getarnt werden. Bei oberflächlicher Analyse des Wertdokuments wird eine Vielzahl im entsprechenden Spektralbereich lumineszierender Partikel gefunden, wobei es sich bei den meisten nicht um das Merkmal handelt. Ist jedoch das genaue Emissionsspektrum des Merkmals bekannt, kann dieses z.B. durch eine automatisierte Suchfunktion aus der Vielzahl der weiteren gefundenen Partikeln isoliert werden.

Alternativ oder zusätzlich kann das Hinzufügen des Tarnstoffs so erfolgen, dass er in den Agglomerat-Partikeln des Sicherheitsmerkmals eingebettet ist. Beispielsweise können innerhalb eines Agglomerat-Partikels zwei scharfbandig in einem Spektralbereich emittierende Leuchtstoffe zusammen mit einem im gleichen Spektralbereich breitbandig-emittierenden, die scharfen Banden überlagernden Leuchtstoff eingebracht sein. Der zusätzliche, breitbandigemittierende Leuchtstoff ist als Tarnstoff in Form von Einzelpartikeln zugemischt. Bei oberflächlicher Analyse wird nur die breitbandige Lumineszenz im entsprechenden Spektralbereich gefunden. Erst eine hochauflösende Messung zeigt bei Agglomerat-Partikeln die Existenz der schmalbandigen Komponenten.

In einer Variante der im obigen Absatz beschriebenen Ausführungsform sind die eigentlichen Merkmals-Komponenten im Agglomerat-Partikel so beschaffen, dass sie nur anhand der Fluoreszenzlebensdauer (mittels "FLIM", d.h. Fluorescence Lifetime Imaging Microscopy) unterschieden werden können.

Werden lumineszierende Agglomerat-Partikel verwendet, ist die Lumineszenzemission bevorzugt scharfbandig, die Lumineszenzemission weist weiter bevorzugt ein komplexes Spektrum aus mindestens zwei scharfen Banden auf, weiterhin wird ein Emissionsspektrum im Bereich von 400 bis 750nm bevorzugt (d.h. der Detektorbereich eines üblichen konfokalen Lasermikroskops), insbesondere bevorzugt wird ein Emissionsspektrum im Bereich von 550 bis 750 nm (auf diese Weise wird der natürliche lumineszierende Hintergrund in Wertdokumenten auf Basis eines Baumwollsubstrats vermieden).

Weiter im Besonderen überlappen sich die komplexen Spektren der einzelnen Phasen, d.h. sind nicht deckungsgleich sondern unterscheiden sich in ihrer Form, nämlich Peak-Lage und/oder Peak-Form und/oder Peak-Breite in einem Bereich von 1 nm bis 30 nm, weiter bevorzugt 2 nm bis 20nm, in mindestens zwei Banden pro Phase. Dadurch wird eine Erkennung der Tatsache dass unterschiedliche Phasen bzw. Lumineszenzemission vorliegen erheblich erschwert. Eine zuverlässige Separation der einzelnen Phasen voneinander kann hier nur mit einem quantitativ messenden spektroskopischen Verfahren erfolgen, das die vorliegenden Unterschiede auflöst.

Gemäß einer weiteren bevorzugten Ausführungsform ist die Lumineszenzemission der lumineszierenden Agglomerat-Partikel bevorzugt scharfbandig, die Lumineszenzemission weist bevorzugt ein komplexes Spektrum aus mehreren scharfen Banden auf, weiterhin wird ein Emissionsspektrum im Bereich von 750nm bis 3000nm bevorzugt.

Die beiden in einem lumineszierenden Agglomerat-Partikel kombinierten Leuchtstoffe weisen bevorzugt disjunkte Anregungsspektren oder teilweise disjunkte Anregungsspektren auf, das heißt sie können getrennt voneinander angeregt werden. Besonders bevorzugt weisen sie zusätzlich mindestens eine gemeinsame Anregungswellenlänge auf, sodass sie sowohl getrennt, als auch gemeinsam anregbar sind.

Gemäß einer weiteren Ausführungsform weisen die zu einem Agglomerat-Partikel kombinierten Leuchtstoffe stark überlappende Anregungsspektren auf (besonders bevorzugt gleiche Anregungsspektren) und unterscheiden sich in der Lumineszenzlebensdauer bei im Wesentlichen gleichem Emissionsspektrum.

Bevorzugt werden die Eigenschaften der den Agglomerat-Partikel zusammensetzenden Einzelstoffe so gewählt, dass bei Kenntnis des jeweiligen spezifischen Signals das ortsaufgelöste Gesamtsignal in die jeweiligen Anteile (bevorzugt automatisiert über einen Algorithmus) aufgetrennt werden kann. Über die ortsaufgelöste Messung der Anteile der Einzelsignale am Gesamtsignal (zum Beispiel spektrale Zusammensetzung, Lumineszenzlebensdauer oder Elementhäufigkeit) lässt sich dann die Eigenschaft eines zusammengesetzten Partikels nachweisen. Ein zusammengesetzter Partikel liegt vor, wenn sich Orte, an denen eine Signalkomponente dominiert (z.B. bevorzugt mehr als 50% Anteil dieser Signalkomponente am Gesamtsignal, weiter bevorzugt mehr als 60%, insbesondere bevorzugt mehr als 75% Anteil), zu einem zusammenhängenden Gebiet fassen lassen und wenn zu jeder Einzelkomponente mindestens ein solches Gebiet existiert und wenn diese Gebiete der Einzelkomponenten zusammenhängen und/ oder lediglich durch ein zusammenhängendes Gebiet mit dem Mischsignal der Komponenten getrennt sind. Im Sinne der Erfindung ist ein vorgenanntes Gebiet hinreichend ausgedehnt, wenn es bei Anwendung der gewählten Analysemethode durch genügend viele Pixel abgebildet wird, um eine sichere Zuordnung des Signals zu ermöglichen. Die geforderte Gebietsgröße hängt von der Analysetechnik und ihrer Auflösung ab. Für diese Beschreibung wird in Anlehnung an ISO 16323 Teil 7 und 8 bevorzugt, dass die Pixelgröße im Fall von zusammengesetzten Partikeln mindestens einem Fünftel des D99-Wertes der Primärpartikelgröße (d.h. der Größe der den Agglomerat-Partikel zusammensetzenden Einzelpartikel bzw. Primärpartikel) entspricht, und dass das physikalische Auflösungsvermögen der benutzten Nachweistechnik entsprechend ebenfalls mindestens einem Fünftel des D99-Wertes der Primärpartikelgröße entspricht. Bevorzugt besteht ein bewertbarer Bereich aus mindestens 5 über ihre Kanten zusammenhängenden Pixeln, besonders bevorzugt aus mindestens 10 zusammenhängenden Pixeln.

Fig. 2 zeigt schematisch eine digitalisierte mikroskopische Aufnahme (100) zweier erfindungsgemäßer Agglomerat-Partikel (200, 300) mit jeweils mehreren Signalbereichen in Form einzelner Pixel (400) oder zusammenhängender Pixelbereiche (210, 220, 230, 240). Diese können jeweils einer der räumlich getrennten, unterschiedlichen, festen homogenen Phasen zugeordnet werden (210, 220) bzw. stellen nicht eindeutig zuordenbare Mischsignale aus erster und zweiter Phaseneigenschaft dar (230). Beispielhaft ist auch ein Signalbereich (240) gekennzeichnet, der nur vier Pixel ("1") umfasst und daher nicht der geforderten Nachweisbedingung genügt. In der Figur bezeichnet die Ziffer "1" den Bereich der ersten homogenen Phase, die Ziffer "2" den Bereich der zweiten homogenen Phase und die Ziffer "3" den Bereich der Mischsignal-Phase.

Weiter bevorzugt müssen diese Gebiete eine Ausdehnung aufweisen, die größer als der D99-Wert der Primärpartikelgrößenverteilung ist, weiter bevorzugt größer 0,5 µm, weiter bevorzugt größer als 1µm und insbesondere bevorzugt größer 2µm. Sinngemäß gilt diese Beschreibung auch für dreidimensional aufgelöste Gebiete.

Die Partikel des erfindungsgemäßen Sicherheitsmerkmals werden insbesondere zur Markierung von Wertdokumenten verwendet. Es wird bevorzugt, dass die Partikel homogen in das Papiersubstrat des Wertdokuments, z.B. eine Banknote, eingebaut werden. Alternativ können die Partikel Bestandteil einer Druckfarbe oder eines anderen Teils des Wertdokuments sein, z.B. Bestandteil eines auf das Wertdokument aufgebrachten Foliensicherheitselements, wie etwa ein Patch oder ein Streifen.

Der bevorzugte Anteil an Sicherheitsmerkmal im Wertdokument liegt im Bereich von 0,001 bis 0,1 Gewichtsprozent, besonders bevorzugt 0,003 bis 0,05 Gewichtsprozent, insbesondere bevorzugt 0,005 bis 0,03 Gewichtsprozent.

Bevorzugt sind die Partikel im Wertdokument in einer solchen Flächendichte enthalten, dass im Partikelgrößenbereich von 4 µm bis 20 µm Partikelanzahlen von 1 bis 1000 Partikel pro Quadratmillimeter, weiter bevorzugt von 1 bis 100 Partikel pro Quadratmillimeter, insbesondere bevorzugt 1 bis 30 Partikel pro Quadratmillimeter enthalten sind.

Beim Nachweis der Partikel sollte beachtet werden, dass beispielsweise REM/EDX durch die Anregungstiefe auf oberflächennahe Regionen beschränkt ist, während Technologien wie z.B. die konfokale Mikroskopie eine dünne Schicht um die Fokalebene erfassen. Das bedeutet, dass mit einer Geräteeinstellung und/oder Probenpräparation meist nur ein Bruchteil der tatsächlich enthaltenen Merkmalspartikel nachgewiesen werden kann.

Gemäß einer bevorzugten Ausführungsform können die zusammengesetzten Partikel als forensisches Sicherheitsmerkmal mit einem maschinenlesbaren Sicherheitsmerkmal kombiniert werden. Dabei lassen sich drei Arten des Echtheitsnachweises realisieren: (1) nur das maschinenlesbare Merkmal wird herangezogen; (2) nur das forensische Sicherheitsmerkmal wird nachgewiesen; (3) sowohl das maschinenlesbare Merkmal, als auch das forensische Sicherheitsmerkmal werden beide (gleichzeitig oder nacheinander) nachgewiesen.

Bevorzugt handelt es sich bei den maschinenlesbaren Merkmalen um im unsichtbaren Spektralbereich (insbesondere UV oder NIR) lumineszierende Stoffe. Die erfindungsgemäßen zusammengesetzten Partikel werden dabei dem maschinenlesbaren Sicherheitsmerkmal insbesondere in kleiner Menge zugemischt und gemeinsam mit diesem am Wertdokument appliziert. Der Anteil an zusammengesetzten Partikeln im Gemisch mit dem maschinenlesbaren Merkmal liegt dabei bevorzugt im Bereich von 0,2 bis 20 Gewichtsprozent, weiter bevorzugt im Bereich von 1 bis 10 Gewichtsprozent und insbesondere bevorzugt im Bereich von 2 bis 6 Gewichtsprozent (bezogen auf die Gesamtmenge des maschinenlesbaren Merkmals und der Agglomerat-Partikel).

Das forensische Sicherheitsmerkmal kann dabei beispielsweise genutzt werden, um die zweifelsfreie Echtheit des Wertdokuments zu verifizieren bzw. verifizieren zu lassen, ohne Details über die spektroskopischen Eigenschaften und das Auslesen des maschinenlesbaren Merkmals zu kennen bzw. preiszugeben.

Als messbare Eigenschaft der unterschiedlichen homogenen Bereiche im Agglomerat-Partikel wird eine optische Eigenschaft ausgewertet, z.B. durch Messen des ortsaufgelösten Lumineszenzspektrums in einem konfokalen Lasermikroskop. Besonders bevorzugt sind die Agglomerat-Partikel so beschaffen, dass durch visuelle Betrachtung, auch im Fluoreszenzmikroskop, die unterschiedlichen Phasen innerhalb des Agglomerat-Partikels nicht zuverlässig unterschieden werden können. Hierbei ist insbesondere zu beachten, dass bereits in Agglomeraten aus Primärpartikeln einer einzigen Phase meist leichte Variationen in Farbe, Lumineszenzintensität, etc. von Primärpartikel zu Primärpartikel beobachtbar sind, so dass für eine visuelle Beurteilung entsprechend stark unterschiedliche Primärpartikel erforderlich wären. Weiterhin bevorzugt ist eine Überprüfung der Elementarzusammensetzung der einzelnen homogenen Bereiche im Agglomerat-Partikel, z.B. durch Messen der ortsaufgelösten Elementarzusammensetzung über EDX in einem Rasterelektronenmikroskop.

Es ist auch möglich, in analoger Weise andere, sich unterscheidende Eigenschaften in den unterschiedlichen homogenen Bereichen des zusammengesetzten Partikels ortsaufgelöst zu messen und als Kriterium heranzuziehen. Beispielsweise können die mittels eines Ramanmikroskops aufgenommenen, ortsaufgelösten Ramanspektren der einzelnen homogenen Bereiche miteinander verglichen werden. Weiterhin ist es mit einem entsprechenden Aufbau, z.B. Sputtern mittels fokussiertem Ionenstrahl (FIB), möglich, ein ortsaufgelöstes Massenspektrogramm aufzunehmen. In diesem Fall könnte ein zusammengesetzter Partikel z.B. aus jeweils chemisch identischen Stoffen mit unterschiedlichen Isotopenzusammensetzungen bestehen, sodass bei der Auswertung die spezifischen Isotopenarten bzw. Isotopenverteilungen in den unterschiedlichen homogenen Bereichen bewertet werden.

Weiterhin ist es möglich, anstelle der bevorzugten Analysemethoden (konfokales Lasermikroskop, REM/EDX oder REM/WDX) weitere Analysemethoden zur Messung der optischen Eigenschaften oder der Elementarzusammensetzung heranzuziehen. Beispielsweise wäre eine ortsaufgelöste Messung der Elementarzusammensetzung durch EELS (Elektronenenergieverlustspektroskopie) an einem Transmissionselektronenmikroskop messbar.

Ebenso existieren Geräte zur Mikroröntgenfluorenzenzanalyse (µ-RFA), welche ortsaufgelöste Elementarzusammensetzungen bestimmen können. Als Alternative zur konfokalen Lasermikroskopie kann z.B. die 2-Photonen-Mikroskopie an einem Multiphotonenmikroskop genannt werden.

### Ausführungsbeispiel 1 (Leuchtstoffagglomerat als einziges Sicherheitsmerkmal)

Ein erster lumineszierender Leuchtstoff, SrAl₁₂O₁₉:Sm³⁺ (Anregung 405 nm, Emission scharfbandig mit mehreren Linien zwischen 560 nm und 750 nm, Lebensdauer ca. 2,7 ms) und ein zweiter lumineszierender Leuchtstoff, KY₃F₁₀:Pr³⁺(Anregung 444 nm, Emission scharfbandig mit mehreren Linien zwischen 500 nm und 750 nm die teilweise mit den Linien des ersten Leuchtstoffs überlappen, Lebensdauer im Bereich von einigen µs) werden in einem Mengenverhältnis von 1:1 gemischt und mithilfe einer Rührwerkskugelmühle auf eine Korngröße D99 von 5-6 µm bei gleichzeitiger Korngröße D50 von 1,2-2,0 µm heruntergemahlen.

Zur Herstellung der Agglomerate werden in einem thermostatisierbaren Glasbehälter 245 g Wasser vorgelegt und auf 75°C erwärmt. Anschließend werden 43 g Kaliumhydrogencarbonat in warmem Wasser gelöst. Unter Rühren werden 33 g der heruntergemahlenen Leuchtstoffmischung zugegeben und für 1 Minute dispergiert. Anschließend werden 207 g einer verdünnten wässrigen Kaliumwasserglas-Lösung mit einer Geschwindigkeit von 3,5 g pro Minute zudosiert, wobei die Konzentration der Kaliumwasserglaslösung so gewählt ist, dass 15 g SiO₂ an den Agglomeraten abgeschieden werden. Das Produkt wird abfiltriert, zweimal mit 150 ml Wasser gewaschen und bei 60°C im Trockenschrank getrocknet. Es werden Partikelagglomerate mit einer Korngröße D99 von 18-20 µm bei gleichzeitiger Korngröße D50 von 7-9 µm erhalten.

Die hergestellten Agglomerate werden der Papier-Rohmasse während der Blatt-Herstellung so hinzugefügt, dass die Agglomerate im entstandenen Blatt mit einem Massenanteil von 0,02 Gewichtsprozent enthalten sind.

Für den Echtheitsnachweis wird die Existenz der hinzugefügten Agglomerate im Wertdokument geprüft.

Dazu wird das Blatt mittels eines konfokalen Lasermikroskops untersucht. Bei Anregung mit einem Diodenlaser der Wellenlänge 405 nm wird insbesondere der erste lumineszierende Leuchtstoff angeregt, sowie gegebenenfalls die Hintergrundlumineszenz der Papierfasern, Hilfs- und Füllstoffe. Bei Anregung mit einem zweiten Laser der Wellenlänge 440 nm wird insbesondere der zweite Leuchtstoff angeregt.

Die beiden Laser (405 nm und 440 nm) werden gleichzeitig betrieben. Zur Abbildung wird ein geeignetes Objektiv (20x/NA0.8) eingesetzt. Das Gesichtsfeld von 0,7mm x 0,7mm mit 1024x1024 Pixeln wird zeilenweise abgetastet, wobei die Verweildauer auf einem Pixel bei rund 12 µs liegt. Das konfokale Pinhole wird so eingestellt, dass die Auflösung bei 3 µm liegt. An jedem Bildpunkt wird das Lumineszenzlicht spektral aufgelöst gemessen. Die so erhaltenen Spektren werden automatisiert mit Vergleichsspektren korreliert, wodurch das gesuchte Signal vom fluoreszierenden Untergrund getrennt wird und sich auf diese Weise wahrscheinlich positive Nachweisereignisse (Zielpartikel) identifizieren lassen. Ein positives Nachweisereignis bedeutet, dass der Partikel als Agglomerat der beiden eingesetzten lumineszierenden Leuchtstoffe identifiziert wurde, also zusammenhängende Bereiche mit mindestens fünf Pixeln Größe aufweist, in der jeweils eines der beiden zu den Leuchtstoffen gehörenden Spektren dominiert.

In dem untersuchten Gebiet von 5 x 5 Gesichtsfeldern wurden elf Zielpartikel identifiziert. Von diesen elf Zielpartikeln erwiesen sich neun als positive Nachweisereignisse und zwei Partikel mussten verworfen werden, weil sie nicht Bereiche beider Leuchtstoffe aufwiesen bzw. weil die Bereiche nicht groß genug waren.

Beispielhaft ist für ein positives und ein negatives Nachweisereignis das Vorgehen bei der Detailanalyse skizziert.

Für die detaillierte Analyse am Zielpartikel müssen die Abbildungsparameter geeignet angepasst werden. Dazu wird der Ort eines solchen wahrscheinlich positiven Nachweisereignisses ins Zentrum des Bildes gesetzt. Bildgröße (Scanbereich), Fokusebene (z-Position), Auflösung (über das konfokale Pinhole) und Laserleistungen werden so eingestellt, dass der Zielpartikel zum Nachweis genau untersucht werden kann.

Auf dem einen Zielpartikel lassen sich drei Bereiche identifizieren. Bereich 1 besteht aus sieben Pixeln, die sich eindeutig dem Spektrum des ersten lumineszierenden Leuchtstoffs, SrAl₁₂O₁₉:Sm³⁺ zuordnen lassen. Bereich 2 besteht aus neun Pixeln, die sich eindeutig dem Spektrum des zweiten lumineszierenden Leuchtstoffs, KY₃F₁₀:Pr³⁺, zuordnen lassen. Der dritte zusammenhängende Bereich lässt sich spektral wiederum dem ersten Leuchtstoff, SrAl₁₂O₁₉:Sm³⁺ zuordnen, beinhaltet allerdings nur drei zusammenhängende Pixel. Durch neuerliches Anpassen des konfokalen Pinholes zur Erhöhung der Auflösung sowie durch eine Anpassung der Fokusebene wird eine Einstellung gefunden, in der ebenfalls dieser dritte Bereich genügend zusammenhängende Pixel aufweist, sodass auch dieser Bereich zum Echtheitsnachweis herangezogen werden kann. Ein durch die veränderte Fokuslage hinzugekommener Bereich weist keine eindeutige spektrale Zuordnung auf und ein weiterer hinzugekommener Bereich ist mit drei Pixeln zu klein. Der so aufgefundene und analysierte Zielpartikel stellt also ein Agglomerat aus mindestens drei Primärpartikeln der beiden eingesetzten Leuchtstoffe dar und ist ein positiver Nachweis.

Ein anderer Zielpartikel muss in der wie oben durchgeführten detaillierten Analyse verworfen werden, da sich herausstellt, dass nur ein Bereich mit mehr als fünf zusammenhängenden Pixeln eindeutig einem der beiden Spektren zugeordnet werden kann. Die anderen Bereiche sind zu klein oder spektral nicht eindeutig zuordenbar.

Um mit einem alternativen Verfahren den Echtheitsnachweis durchzuführen, wird die Probe im Rasterelektronenmikroskop (REM) mittels EDX nach einem geräteüblichen Vorbereitungsverfahren untersucht. In einem ersten bildgebenden Schritt werden mögliche positive Nachweisereignisse (Zielpartikel) gesucht. Dazu wird entweder der Elementkontrast im REM-Bild herangezogen oder gleich eine abbildende EDX-Analyse durchgeführt, wobei gezielt die Elemente Y und Sr gesucht werden. Diese Elemente zeigen für die erste Suche geeignete EDX-Signale. Zum Echtheitsnachweis werden die Zielpartikel aufgesucht und an diesen Partikeln eine auflösende EDX-Analyse durchgeführt. An den Partikeln soll zum Nachweis die Eigenschaft nachgewiesen werden, dass in separierbaren Bereichen von mindestens fünf zusammenhängenden Pixeln die beiden zum ersten Leuchtstoff gehörenden Elemente Sr und A1 beziehungsweise die zum zweiten Leuchtstoff gehörenden Elemente Y und F aufgefunden werden.

Bei der Analyse eines Zielpartikels (Leuchtstoff-Agglomerats) an einem Rasterelektronenmikroskop im abbildenden EDX-Modus lassen sich mehrere separate Bereiche identifizieren, welche die Elemente Yttrium und Fluor bzw. Strontium und Aluminium enthalten. Zugleich wird auf dem gesamten Agglomerat Silizium festgestellt. Da sich hinreichend große separierbare Bereiche feststellen lassen, die jeweils zwei zusammengehörige Elemente der eingesetzten Leuchtstoffe gleichzeitig enthalten, gilt dieses Agglomerat als positiver Nachweis. Weitere aufgefundene Agglomerate werden in dieser Weise untersucht und bewertet.

## Patentansprüche

1. Sicherheitsmerkmal für die Absicherung von Wertdokumenten, umfassend Agglomerat-Partikel, die aus mindestens zwei unterschiedlichen, räumlich getrennten festen homogenen Phasen zusammengesetzt sind, wobei jede der Phasen nur mittels eines ortsauflösenden spektroskopischen Messverfahrens, das dazu geeignet ist, bis auf Einzelpartikelebene aufzulösen, räumlich aufgelöst detektierbar, separierbar und identifizierbar ist, wobei die mindestens zwei festen homogenen Phasen mit zumindest einer durch das ortsauflösende spektroskopische Messverfahren unterscheidbaren Eigenschaft, nämlich Lumineszenz, vorliegen, und unterschiedliche lumineszierende Phasen mit aus einer einzelnen Farbgruppe gewählten Dotierelementen im gleichen oder in unterschiedlichen Matrixmaterialien sind und lumineszierende Stoffe umfassen, die im sichtbaren Spektralbereich emittieren.

2. Sicherheitsmerkmal nach Anspruch 1, wobei die lumineszierenden Stoffe eine unterschiedliche Anregungswellenlänge aufweisen.

3. Sicherheitsmerkmal nach einem der Ansprüche 1 oder 2, wobei die Agglomerat-Partikel eine Korngröße D99 in einem Bereich von 1 Mikrometer bis 30 Mikrometer, bevorzugt in einem Bereich von 5 Mikrometer bis 20 Mikrometer, weiter bevorzugt in einem Bereich von 10 Mikrometer bis 20 Mikrometer und insbesondere bevorzugt in einem Bereich von 15 Mikrometer bis 20 Mikrometer aufweisen.

4. Sicherheitsmerkmal nach einem der Ansprüche 1 bis 3, wobei die Agglomerat-Partikel eine Korngröße D50 in einem Bereich von 1 Mikrometer bis 30 Mikrometer, bevorzugt in einem Bereich von 5 Mikrometer bis 20 Mikrometer und insbesondere bevorzugt in einem Bereich von 7 Mikrometer bis 20 Mikrometer aufweisen.

5. Sicherheitsmerkmal nach einem der Ansprüche 1 bis 4, wobei die die Agglomerat-Partikel zusammensetzenden, festen homogenen Phasen jeweils eine Korngröße (D99) in einem Bereich von 3 Mikrometer bis 15 Mikrometer, bevorzugt in einem Bereich von 4 Mikrometer bis 10 Mikrometer und insbesondere bevorzugt in einem Bereich von 5 Mikrometer bis 9 Mikrometer aufweisen.

6. Sicherheitsmerkmal nach einem der Ansprüche 1 bis 5, wobei die die Agglomerat-Partikel zusammensetzenden, festen homogenen Phasen jeweils eine Korngröße (D50) in einem Bereich von 1 Mikrometer bis 8 Mikrometer, bevorzugt in einem Bereich von 1,2 Mikrometer bis 5 Mikrometer und insbesondere bevorzugt in einem Bereich von 1,5 Mikrometer bis 3 Mikrometer aufweisen.

7. Sicherheitsmerkmal nach einem der Ansprüche 1 bis 6, wobei die Agglomerat-Partikel aus zwei unterschiedlichen, räumlich getrennten festen homogenen Phasen zusammengesetzt sind, von denen die erste homogene Phase auf einem ersten lumineszierenden Stoff beruht und die zweite homogene Phase auf einem zweiten lumineszierenden Stoff beruht, wobei die beiden lumineszierenden Stoffe unterschiedliche An- und/oder Abklingzeiten aufweisen.

8. Sicherheitsmerkmal nach einem der Ansprüche 1 bis 7, wobei die lumineszierenden Agglomerat-Partikel so beschaffen sind, dass die Lumineszenzemission jeder einzelnen Phase ein komplexes Spektrum aus mindestens zwei scharfen Banden aufweist und das Spektrum ein Emissionsspektrum im Bereich von 400 bis 750nm ist, wobei sich die komplexen Spektren der einzelnen Phasen überlappen, d.h. sie sind nicht deckungsgleich sondern unterscheiden sich in ihrer Form, nämlich Peak-Lage und/oder Peak-Form und/oder Peak-Breite in einem Bereich von 1 nm bis 30 nm, bevorzugt 2 nm bis 20nm, in mindestens zwei Banden pro Phase.

9. Sicherheitsmerkmal nach einem der Ansprüche 1 bis 7, wobei die Agglomerat-Partikel aus zwei unterschiedlichen, räumlich getrennten festen homogenen Phasen zusammengesetzt sind, von denen die erste homogene Phase auf einem ersten lumineszierenden Stoff beruht und die zweite homogene Phase auf einem zweiten lumineszierenden Stoff beruht, wobei die beiden lumineszierenden Stoffe die gleichen Emissionswellenlängen, aber unterschiedliche Anregungswellenlängen und/oder Abklingzeiten und/oder Anklingzeiten aufweisen.

10. Sicherheitsmerkmal nach einem der Ansprüche 1 bis 9, wobei die Agglomerat-Partikel aus zwei unterschiedlichen, räumlich getrennten festen homogenen Phasen zusammengesetzt sind, von denen die erste homogene Phase auf einem ersten lumineszierenden Stoff mit einer Anklingzeit >2µs, bevorzugt >10µs, beruht.

11. Sicherheitsmerkmal nach einem der Ansprüche 1 bis 10, wobei die Agglomerat-Partikel aus zwei unterschiedlichen, räumlich getrennten festen homogenen Phasen zusammengesetzt sind, von denen die erste homogene Phase auf einem ersten lumineszierenden Stoff beruht und die zweite homogene Phase auf einem zweiten lumineszierenden Stoff beruht, wobei die beiden lumineszierenden Stoffe die gleichen Lumineszenzeigenschaften aufweisen, sich aber hinsichtlich ihrer Elementarzusammensetzungen voneinander unterscheiden.

12. Sicherheitsmerkmal nach einem der Ansprüche 1 bis 11, wobei zusätzlich mindestens ein tarnender Stoff zugegeben wird, der selbst nicht aus zusammengesetzten Partikeln besteht und unter der zum Nachweis genutzten Analysemethode ähnliche Eigenschaften wie die Agglomerat-Partikel aufweist und insbesondere im Falle eines scharfbandig in einem bestimmten Spektralbereich emittierenden lumineszierenden Agglomerat-Partikels breitbandig in diesem Spektralbereich luminesziert.

13. Wertdokument, insbesondere eine Banknote, mit einem Sicherheitsmerkmal nach einem der Ansprüche 1 bis 12.

14. Wertdokument nach Anspruch 13, wobei das Sicherheitsmerkmal in das Volumen des Wertdokuments eingebracht und/oder auf das Wertdokument aufgebracht ist.

15. Wertdokument nach Anspruch 13 oder 14, wobei der Anteil des Sicherheitsmerkmals im Wertdokument in einem Bereich von 0,001 bis 0,1 Gewichtsprozent, bevorzugt in einem Bereich von 0,003 bis 0,05 Gewichtsprozent und insbesondere bevorzugt in einem Bereich von 0,005 bis 0,05 Gewichtsprozent liegt.

16. Wertdokument nach einem der Ansprüche 13 bis 15, wobei die Agglomerat-Partikel im Wertdokument mit einer solchen Flächendichte enthalten sind, dass im Partikelgrößenbereich von 4 Mikrometer bis 20 Mikrometer Partikelanzahlen von 1 bis 1000 Partikel pro Quadratmillimeter, bevorzugt 1 bis 100 Partikel pro Quadratmillimeter, insbesondere bevorzugt 1 bis 30 Partikel pro Quadratmillimeter enthalten sind.

17. Verfahren zur Prüfung der Echtheit des Wertdokuments nach einem der Ansprüche 13 bis 16, umfassend den Schritt des ortsaufgelösten Detektierens, Separierens und Identifizierens der in den Agglomerat-Partikeln enthaltenen mindestens zwei unterschiedlichen, räumlich getrennten festen homogenen Phasen mittels mindestens eines ortsauflösenden spektroskopischen Messverfahrens, das dazu geeignet ist, bis auf Einzelpartikelebene aufzulösen und spektral zuverlässig die Phasen zu separieren.

18. Verfahren nach Anspruch 17, wobei das ortsauflösende Analyseverfahren von der Gruppe bestehend aus konfokaler Lasermikroskopie, Multiphotonenmikroskopie, Fluoreszenzlebensdauer-Mikroskopie (FLIM), ortsaufgelöster Röntgenbeugung (µXRD), ortsaufgelöster Raman-Streuung (µRaman), Rasterelektronenmikroskopie mit energiedispersiver Röntgenspektroskopie (REM/EDX) und ortsaufgelöster Röntgenfluoreszenzanalyse (µXRF) gewählt ist.

19. Verfahren zur Absicherung eines Wertdokuments, umfassend die folgenden Schritte:
a) Vorbestimmen mindestens eines ortsauflösenden spektroskopischen Messverfahrens;
b) Auswahl von mindestens zwei festen homogenen Phasen mit zumindest einer durch das ortsauflösende spektroskopische Messverfahren unterscheidbaren Eigenschaft;
c) Kombinieren der mindestens zwei festen homogenen Phasen zu Agglomerat-Partikeln;
d) Ein- und/oder Aufbringen der Agglomerat-Partikel als Sicherheitsmerkmal in bzw. auf das Wertdokument, wobei das Sicherheitsmerkmal nach einem der Ansprüche 1 bis 12 definiert ist;
e) Ortsaufgelöster Nachweis der Substruktur der Agglomerat-Partikel und zuverlässige Separation der spektroskopischen Eigenschaften der homogenen Phasen mittels des vorbestimmten ortsauflösenden spektroskopischen Messverfahrens;
f) Bewertung der Echtheit des Wertdokuments anhand der in Schritt e) gewonnenen Daten.

20. Verwendung des Sicherheitsmerkmals nach einem der Ansprüche 1 bis 12 als forensisches Sicherheitsmerkmal in einem Wertdokument, d.h. für den auf der Analyse von Einzelpartikeln mit ortsaufgelösten mikroskopischen, spektroskopischen Methoden beruhenden Echtheitsnachweis eines Wertdokuments, insbesondere einer Banknote, wobei der Anteil des Sicherheitsmerkmals im Wertdokument in einem Bereich von 0,001 bis 0,1 Gewichtsprozent, bevorzugt in einem Bereich von 0,003 bis 0,05 Gewichtsprozent und insbesondere bevorzugt in einem Bereich von 0,005 bis 0,05 Gewichtsprozent liegt.

21. Verwendung nach Anspruch 20, wobei die Agglomerat- Partikel im Wertdokument mit einer solchen Flächendichte enthalten sind, dass im Partikelgrößenbereich von 4 Mikrometer bis 20 Mikrometer Partikelanzahlen von 1 bis 1000 Partikel pro Quadratmillimeter, bevorzugt 1 bis 100 Partikel pro Quadratmillimeter, insbesondere bevorzugt 1 bis 30 Partikel pro Quadratmillimeter enthalten sind.

22. Wertdokumentsystem mit zumindest erste Agglomerat-Partikel enthaltenden ersten Wertdokumenten, z.B. einer ersten Denomination, und zweite Agglomerat-Partikel enthaltenden zweiten Wertdokumenten, z.B. einer zweiten Denomination, wobei die ersten und zweiten Wertdokumente jeweils gemäß einem der Ansprüche 13 bis 16 definiert sind, wobei sich die ersten und zweiten Wertdokumente mit einem oder mehreren vorbestimmten ortsauflösenden spektroskopischen Messverfahren anhand mindestens einer der räumlich getrennten festen homogenen Phasen unterscheiden lassen.

23. Wertdokumentsystem nach Anspruch 22, wobei die unterscheidbaren Eigenschaften ausgewählt werden aus Lumineszenzemissionswellenlänge, Lumineszenzanregungswellenlänge, zeitliches Verhalten der Lumineszenz, Elementzusammensetzung, insbesondere EDX-Signatur, dreidimensionale Form, insbesondere Aspektverhältnis, Isotopenverhältnis, Schwingungsspektrum, insbesondere IR- oder Raman-Spektrum, Kristallstruktur, magnetische Eigenschaften.

## Claims

1. Security feature for the securing of value documents comprising agglomerate particles composed of at least two different spatially separate solid homogeneous phases, wherein each of the phases is amenable to spatially resolved detection, separation and identification only using a spatially resolving spectroscopic method of measurement suitable for resolving down to individual particle level, wherein the at least two solid homogeneous phases have at least one property distinguishable by the spatially resolving spectroscopic method of measurement, namely luminescence, and different luminescent phases comprising doping elements selected from a single colour group are present in the same or in different matrix materials and comprise luminescent substances that emit in the visible spectral range.

2. Security feature according to Claim 1, wherein the luminescent substances have a different excitation wavelength.

3. Security feature according to either of Claims 1 or 2, wherein the agglomerate particles have a particle size D99 in the range from 1 micrometre to 30 micrometres, preferably in a range from 5 micrometres to 20 micrometres, more preferably in a range from 10 micrometres to 20 micrometres and especially preferably in a range from 15 micrometres to 20 micrometres.

4. Security feature according to any of Claims 1 to 3, wherein the agglomerate particles have a particle size D50 in a range from 1 micrometre to 30 micrometres, preferably in a range from 5 micrometres to 20 micrometres and especially preferably in a range from 7 micrometres to 20 micrometres.

5. Security feature according to any of Claims 1 to 4, wherein the solid homogeneous phases of which the agglomerate particles are composed each have a particle size (D99) in a range from 3 micrometres to 15 micrometres, preferably in a range from 4 micrometres to 10 micrometres and especially preferably in a range from 5 micrometres to 9 micrometres.

6. Security feature according to any of Claims 1 to 5, wherein the solid homogeneous phases of which the agglomerate particles are composed each have a particle size (D50) in a range from 1 micrometre to 8 micrometres, preferably in a range from 1.2 micrometres to 5 micrometres and especially preferably in a range from 1.5 micrometres to 3 micrometres.

7. Security feature according to any of Claims 1 to 6, wherein the agglomerate particles are composed of two different spatially separate solid homogeneous phases, of which the first homogeneous phase is based on a first luminescent substance and the second homogeneous phase is based on a second luminescent substance, wherein the two luminescent substances have different onset and decay times.

8. Security feature according to any of Claims 1 to 7, wherein the luminescent agglomerate particles have a constitution such that the luminescence emission of each individual phase has a complex spectrum of at least two narrow bands and the spectrum is an emission spectrum in the range from 400 to 750 nm, wherein the complex spectra of the individual phases overlap, i.e. are not superimposable but rather differ in shape, namely peak position and/or peak shape and/or peak width, in a range from 1 nm to 30 nm, preferably 2 nm to 20 nm, in at least two bands per phase.

9. Security feature according to any of Claims 1 to 7, wherein the agglomerate particles are composed of two different spatially separate solid homogeneous phases, of which the first homogeneous phase is based on a first luminescent substance and the second homogeneous phase is based on a second luminescent substance, wherein the two luminescent substances have the same emission wavelengths but different excitation wavelengths and/or decay times and/or onset times.

10. Security feature according to any of Claims 1 to 9, wherein the agglomerate particles are composed of two different spatially separate solid homogeneous phases, of which the first homogeneous phase is based on a first luminescent substance having an onset time >2 ps, preferably >10 µs.

11. Security feature according to any of Claims 1 to 10, wherein the agglomerate particles are composed of two different spatially separate solid homogeneous phases, of which the first homogeneous phase is based on a first luminescent substance and the second homogeneous phase is based on a second luminescent substance, wherein the two luminescent substances have the same luminescence properties but differ in terms of their elemental compositions.

12. Security feature according to any of Claims 1 to 11, wherein in addition at least one masking substance is added which itself does not consist of aggregated particles and under the analytical method used for detection exhibits similar properties to the agglomerate particles and in particular in the case of an agglomerate particle exhibiting narrow-band emission in a certain spectral range exhibits broad-band emission in this spectral range.

13. Value document, in particular a banknote, having a security feature according to any of Claims 1 to 12.

14. Value document according to Claim 13, wherein the security feature has been introduced into the volume of the value document and/or has been applied to the value document.

15. Value document according to Claim 13 or 14, wherein the proportion of the security feature in the value document is in a range from 0.001% to 0.1% by weight, preferably in a range from 0.003% to 0.05% by weight and especially preferably in a range from 0.005% to 0.05% by weight.

16. Value document according to any of Claims 13 to 15, wherein the agglomerate particles in the value document are present in an areal density such that in the particle size range from 4 micrometres to 20 micrometres particle counts of 1 to 1000 particles per square millimetre, preferably 1 to 100 particles per square millimetre, especially preferably 1 to 30 particles per square millimetre, are present.

17. Process for verifying the authenticity of the value document according to any of Claims 13 to 16, comprising the step of spatially resolved detection, separation and identification of the at least two different spatially separate solid homogeneous phases present in the agglomerate particles using at least one spatially resolving spectroscopic method of measurement which is suitable for resolving down to individual particle level.

18. Process according to Claim 17, wherein the spatially resolving analytical method is selected from the group consisting of confocal laser microscopy, multi-photon microscopy, fluorescence lifetime microscopy (FLIM), spatially resolved X-ray diffraction (µXRD), spatially resolved Raman scattering (µRaman), scanning electron microscopy with energy dispersive X-ray spectroscopy (REM/EDX) and spatially resolved X-ray fluorescence analysis (µXRF).

19. Process for securing a value document comprising the steps of:
a) predetermining at least one spatially resolving spectroscopic method of measurement;
b) selecting at least two solid homogeneous phases having at least one property distinguishable by the spatially resolving spectroscopic method of measurement;
c) combining the at least two solid homogeneous phases to afford agglomerate particles;
d) introducing and/or applying the agglomerate particles as a security feature into/onto the value document, wherein the value document is defined according to any of Claims 1 to 12;
e) spatially resolved detection of the substructure of the agglomerate particles and reliable separation of the spectroscopic properties of the homogeneous phases using the predetermined spatially resolving spectroscopic method of measurement;
f) evaluating the authenticity of the value document using the data obtained in step e).

20. Use of the security feature according to any of Claims 1 to 12 as a forensic security feature in a value document, i.e. for authentication of a value document, in particular a banknote, based on analysis of individual particles with spatially resolved microscopic, spectroscopic, methods, wherein the proportion of the security feature in the value document is in a range from 0.001% to 0.1% by weight, preferably in a range from 0.003% to 0.05% by weight and especially preferably in a range from 0.005% to 0.05% by weight.

21. Use according to Claim 20, wherein the agglomerate particles in the value document are present in an areal density such that in a particle size range of 4 micrometres to 20 micrometres particle counts of 1 to 1000 particles per square millimeter, preferably 1 to 100 particles per square millimeter, especially preferably 1 to 30 particles per square millimeter are present.

22. Value document system comprising at least first value documents containing first agglomerate particles, for example a first denomination, and second value documents containing second agglomerate particles, for example a second denomination, wherein the first and second value documents are each defined according to any of claims 13 to 16, wherein the first and second value documents are distinguishable by at least one of the spatially separate solid homogeneous phases with one or more predetermined spatially resolving spectroscopic methods of measurement.

23. Value document system according to Claim 22, wherein the distinguishable properties are selected from luminescence emission wavelength, luminescence excitation wavelength, behaviour of luminescence over time, elemental composition, in particular EDX signature, three-dimensional shape, in particular aspect ratio, isotopic ratio, vibrational spectrum, in particular IR or Raman spectrum, crystal structure, magnetic properties.

## Revendications

1. Signe de sécurité servant à la protection de documents de valeur, comprenant des particules d'agglomérat qui sont composées d'au moins deux phases homogènes solides différentes, spatialement séparées, dans lequel chacune des phases ne peut être détectée, séparée et identifiée de manière spatialement résolue qu'au moyen d'un procédé de mesure spectroscopique spatialement résolu, qui est approprié pour une résolution jusqu'au niveau de la particule individuelle, dans lequel lesdites au moins deux phases homogènes solides sont présentes avec au moins une propriété pouvant être distinguée par le procédé de mesure spectroscopique spatialement résolu, à savoir la luminescence, et dans lequel des phases luminescentes différentes comportant des éléments dopants sélectionnés dans un seul groupe de couleurs sont dans un matériau de matrice identique ou différent et comprennent des substances luminescentes qui émettent dans le domaine spectral visible.

2. Signe de sécurité selon la revendication 1, dans lequel les substances luminescentes présentent une longueur d'onde d'excitation différente.

3. Signe de sécurité selon l'une quelconque des revendications 1 ou 2, dans lequel les particules d'agglomérat présentent une granulométrie D99 se situant dans une plage de 1 micromètre à 30 micromètres, de préférence dans une plage de 5 micromètres à 20 micromètres, plus préférablement dans une plage de 10 micromètres à 20 micromètres et de manière particulièrement préférable dans une plage de 15 micromètres à 20 micromètres.

4. Signe de sécurité selon l'une quelconque des revendications 1 à 3, dans lequel les particules d'agglomérat présentent une granulométrie D50 se situant dans une plage de 1 micromètre à 30 micromètres, de préférence dans une plage de 5 micromètres à 20 micromètres et de manière particulièrement préférable dans une plage de 7 micromètres à 20 micromètres.

5. Signe de sécurité selon l'une quelconque des revendications 1 à 4, dans lequel les phases homogènes solides composant les particules d'agglomérat présentent respectivement une granulométrie (D99) se situant dans une plage de 3 micromètres à 15 micromètres, de préférence dans une plage de 4 micromètres à 10 micromètres et de manière particulièrement préférable dans une plage de 5 micromètres à 9 micromètres.

6. Signe de sécurité selon l'une quelconque des revendications 1 à 5, dans lequel les phases homogènes solides composant les particules d'agglomérat présentent respectivement une granulométrie (D50) se situant dans une plage de 1 micromètre à 8 micromètres, de préférence dans une plage de 1,2 micromètres à 5 micromètres et de manière particulièrement préférable dans une plage de 1,5 micromètres à 3 micromètres.

7. Signe de sécurité selon l'une quelconque des revendications 1 à 6, dans lequel les particules d'agglomérat se composent de deux phases homogènes solides différentes et spatialement séparées, parmi lesquelles la première phase homogène est à base d'une première substance luminescente et la deuxième phase homogène est à base d'une deuxième substance luminescente, dans lequel les deux substances luminescentes présentent des temps de croissance et/ou de décroissance différents.

8. Signe de sécurité selon l'une quelconque des revendications 1 à 7, dans lequel les particules d'agglomérat luminescentes présentent des caractéristiques telles que l'émission luminescente de chaque phase individuelle présente un spectre complexe constitué d'au moins deux bandes prononcées et le spectre est un spectre d'émission se situant dans la plage de 400 à 750 nm, dans lequel les spectres complexes des phases individuelles se chevauchent, c'est-à-dire qu'ils ne sont pas coïncidents mais se distinguent par leur forme, à savoir par la position du pic et/ou la forme du pic et/ou la largeur du pic dans une plage de 1 nm à 30 nm, de préférence de 2 nm à 20 nm, dans au moins deux bandes par phase.

9. Signe de sécurité selon l'une quelconque des revendications 1 à 7, dans lequel les particules d'agglomérat se composent de deux phases homogènes solides différentes et spatialement séparées, parmi lesquelles la première phase homogène est à base d'une première substance luminescente et la deuxième phase homogène est à base d'une deuxième substance luminescente, dans lequel les deux substances luminescentes présentent les mêmes longueurs d'onde d'émission, mais des longueurs d'onde d'excitation et/ou des temps de décroissance et/ou des temps de croissance différents.

10. Signe de sécurité selon l'une quelconque des revendications 1 à 9, dans lequel les particules d'agglomérat se composent de deux phases homogènes solides différentes et spatialement séparées, parmi lesquelles la première phase homogène est à base d'une première substance luminescente ayant un temps de croissance > 2µs, de préférence > 10 µs.

11. Signe de sécurité selon l'une quelconque des revendications 1 à 10, dans lequel les particules d'agglomérat se composent de deux phases homogènes solides différentes et spatialement séparées, parmi lesquelles la première phase homogène est à base d'une première substance luminescente et la deuxième phase homogène est à base d'une deuxième substance luminescente, dans lequel les deux substances luminescentes présentent les mêmes propriétés de luminescence, mais se distinguent l'une de l'autre en ce qui concerne leurs compositions élémentaires.

12. Signe de sécurité selon l'une quelconque des revendications 1 à 11, dans lequel au moins une substance de camouflage est en outre ajoutée, laquelle n'est pas elle-même constituée de particules composées et présente, conformément à la méthode d'analyse utilisée pour la détection, des propriétés semblables à celles des particules d'agglomérat et, dans le cas d'une particule d'agglomérat luminescente émettant dans une plage spectrale déterminée à bande étroite, émet une luminescence à large bande dans cette plage spectrale.

13. Document de valeur, en particulier un billet de banque, comportant un signe de sécurité selon l'une quelconque des revendications 1 à 12.

14. Document de valeur selon la revendication 13, dans lequel le signe de sécurité est intégré dans le volume du document de valeur et/ou est appliqué sur le document de valeur.

15. Document de valeur selon la revendication 13 ou 14, dans lequel la proportion du signe de sécurité dans le document de valeur se situe dans une plage de 0,001 à 0,1 pour cent en poids, de préférence dans une plage de 0,003 à 0,05 pour cent en poids et de manière particulièrement préférable dans une plage de 0,005 à 0,05 pour cent en poids.

16. Document de valeur selon l'une quelconque des revendications 13 à 15, dans lequel les particules d'agglomérat sont contenues dans le document de valeur avec une densité surfacique telle que des nombres de particules de 1 à 1000 particules par millimètre carré, de préférence de 1 à 100 particules par millimètre carré et de manière particulièrement préférable de 1 à 30 particules par millimètre carré, sont contenues dans la plage de tailles de particules de 4 micromètres à 20 micromètres.

17. Procédé de vérification de l'authenticité du document de valeur selon l'une quelconque des revendications 13 à 16, comprenant l'étape de détection, de séparation et d'identification spatialement résolues desdites au moins deux phases homogènes solides différentes et spatialement séparées, contenues dans les particules d'agglomérat, au moyen d'au moins un procédé de mesure spectroscopique spatialement résolu, qui est approprié pour une résolution jusqu'au niveau de la particule individuelle et pour séparer les phases de manière spectralement fiable.

18. Procédé selon la revendication 17, dans lequel le procédé d'analyse spatialement résolu est sélectionné dans le groupe constitué par la microscopie laser confocale, la microscopie multiphotonique, la microscopie à durée de vie de fluorescence (FLIM), la diffraction des rayons X spatialement résolue (µXRD), la diffusion Raman spatialement résolue (µRaman), la microscopie électronique à balayage avec spectroscopie des rayons X à dispersion d'énergie (MEB/EDX) et l'analyse de fluorescence X spatialement résolue (µXRF).

19. Procédé de protection d'un document de valeur, comprenant les étapes suivantes :
a) la prédétermination d'au moins un procédé de mesure spectroscopique spatialement résolu ;
b) la sélection d'au moins deux phases homogènes solides ayant au moins une propriété pouvant être distinguée par le procédé de mesure spectroscopique spatialement résolu ;
c) la combinaison desdites au moins deux phases homogènes solides en des particules d'agglomérat ;
d) l'insertion et/ou l'application des particules d'agglomérat en tant que signe de sécurité dans ou sur le document de valeur, dans lequel le signe de sécurité est défini selon l'une quelconque des revendications 1 à 12 ;
e) la détection spatialement résolue de la sous-structure des particules d'agglomérat et la séparation fiable des propriétés spectroscopiques des phases homogènes au moyen du procédé de mesure spectroscopique spatialement résolu prédéterminé ;
f) l'évaluation de l'authenticité du document de valeur à l'aide des données obtenues à l'étapes e).

20. Utilisation du signe de sécurité selon l'une quelconque des revendications 1 à 12 en tant que signe de sécurité médico-légal dans un document de valeur, c'est-à-dire pour la preuve d'authenticité d'un document de valeur, en particulier d'un billet de banque, se basant sur l'analyse de particules individuelles par des méthodes spectroscopiques microscopiques spatialement résolues, dans laquelle la proportion du signe de sécurité dans le document de valeur se situe dans une plage de 0,001 à 0,1 pour cent en poids, de préférence dans une plage de 0,003 à 0,05 pour cent en poids et de manière particulièrement préférable dans une plage de 0,005 à 0,05 pour cent en poids.

21. Utilisation selon la revendication 20, dans laquelle les particules d'agglomérat sont contenues dans le document de valeur avec une densité surfacique telle que des nombres de particules de 1 à 1000 particules par millimètre carré, de préférence de 1 à 100 particules par millimètre carré et de manière particulièrement préférable de 1 à 30 particules par millimètre carré, sont contenues dans la plage de tailles de particules de 4 micromètres à 20 micromètres.

22. Système de documents de valeur comprenant au moins des premiers documents de valeur contenant des premières particules d'agglomérat, par exemple d'une première dénomination, et des deuxièmes documents de valeur contenant des deuxièmes particules d'agglomérat, par exemple d'une deuxième dénomination, dans lequel les premiers et deuxièmes documents de valeur sont respectivement définis selon l'une quelconque des revendications 13 à 16, dans lequel les premiers et deuxièmes documents de valeur peuvent être distingués par un ou plusieurs procédés de mesure spectroscopiques spatialement résolus prédéterminés à l'aide d'au moins l'une des phases homogènes solides spatialement séparées.

23. Système de documents de valeur selon la revendication 22, dans lequel les propriétés pouvant être distinguées sont sélectionnées parmi la longueur d'onde d'émission de luminescence, la longueur d'onde d'excitation de luminescence, l'évolution dans le temps de la luminescence, la composition élémentaire, en particulier la signature EDX, la forme tridimensionnelle, en particulier le rapport de forme, le rapport isotopique, le spectre de vibration, en particulier le spectre IR ou Raman, la structure cristalline, les propriétés magnétiques.
